# EUROPEAN PATENT APPLICATION

(11) **EP 3 001 914 A1**
(43) Date of publication of application: **06.04.2016**
(21) Application number: 15185424.7
(22) Date of filing: 16.09.2015
(51) Int. Cl.: A23L 33/10, A23L 33/17, A23L 33/21, A23L 33/00, A23L 29/00

(54) **DIETETIC MIXTURES AND DIETETIC PRODUCTS MADE THEREWITH FOR HUMAN CONSUMPTION IN PARTICULAR CONDITIONS IN WHICH ELIMINATION OF CARBOHYDRATES IS NECESSARY**

(30) Priority: 19.09.2014 IT RA20140017
(71) Applicant: Le Gamberi Foods S.r.l., 47100 Forli' (FC) (IT)
(72) Inventor: GAMBERI, Marina, 47121 FORLI' FC (IT); GAMBERI, Marisa, 47121 FORLI' FC (IT)
(74) Representative: Modiano, Micaela Nadia

(57) **Abstract**

Dietetic mixtures that make it possible to follow a aglucidic and hyperlipidic diet for persons in particular conditions of health which require the elimination of carbohydrates (amides and simple sugars); such dietetic mixtures are made from plant proteins, plant fibers and lipids; the elimination of farinaceous products and their substitution with aglucidic and hyperlipidic products made with the above-mentioned mixtures results in the ketogenic diet, a particular diet that is based on a drastic reduction in carbohydrates.

## Description

The present invention relates to dietetic mixtures that make it possible to follow an aglucidic and hyperlipidic diet for persons in particular conditions of health which require the elimination of carbohydrates (amides and simple sugars).

Such dietetic mixtures according to the present invention are made from plant proteins, plant fibers and lipids.

The elimination of farinaceous products and their substitution with aglucidic and hyperlipidic products made with the above-mentioned mixtures results in the ketogenic diet, a particular diet that has been known for decades and which is based on a drastic reduction in carbohydrates. This leads to a metabolic condition known as ketosis, which causes the organism to:
- use fats almost exclusively as a source of energy, for losing weight;
- inhibit the metabolizing of sugars, for diseases in which this is necessary.

In recent years scientific evidence has increased of the efficacy of ketogenic diets (KDs) on several diseases. Even though the most conventional and widespread use of the above-mentioned diets is linked to weight loss (obesity and excess weight), their use in clinical practice has been widespread since the last century. In fact, KDs have been used since 1920 as a therapy for medicine-resistant epilepsy in the child. In recent years KDs have seen their use proliferate in many different diseases and ketogenic diet protocols have even been added to the guidelines of several hospitals in the US and UK, such as Great Ormond Street Hospital, John Hopkins Hospital or Barrow Neurological Institute.

The ketogenic diet therefore appears to offer a real therapeutic aid in several different diseases.

### Obesity

It has now been comprehensively shown that a ketogenic diet is more effective than other types of diet on medium- to long-term weight loss and, if carried out correctly, it does not cause the "yo-yo effect" (i.e. regaining the kilograms of fat lost).

### Tumors

There is a clear increase in research studies on KDs and tumors. It has been seen that some types of tumors preferentially use the glucidic metabolism and that tumor cells shift their metabolism toward anaerobic glycolysis. The goal of ketogenic diets is therefore to reduce the levels of glycemia so as to keep the development of the tumor mass in check, by reducing the energy substrate that it can draw on.

### Epilepsy

There are innumerable data on the effectiveness of the ketogenic diet on epilepsy. The guidelines of international scientific societies include the KD as therapy for medicine-resistant epilepsy. Although the mechanisms are not fully understood, its effectiveness is undeniable. There is another disease linked to epilepsy for which the only cure is the KD: GLUT-1 deficiency syndrome. Persons affected by this syndrome, i.e. a deficiency of the GLUT-1 protein that transports glucose in the brain, can lead a normal life only by following a strict KD.

### Neurological diseases

There is also a spectrum of various neurological and/or neurodegenerative diseases that appear to draw benefit from a KD. Many studies appear to suggest that KDs can be useful in treating ALS, Alzheimer's disease, Parkinson's disease and other, related diseases. Here also, the mechanisms are different but they are in essence based on reducing the supply of glucose and increasing ketonuria, which enables ketone bodies to perform several different complex functions at the cellular level. Furthermore, the KD would appear to have a neuroprotective function by reducing glycemia. But the mechanisms may also include the effects of an increased level of circulating fatty acids, which may have a protective function in ALS, although the data are not conclusive.

### Type 2 diabetes

Paradigms in this disease are changing as well. Ketogenic diets, which were once considered out of question, have now been rehabilitated and have shown their effectiveness. In fact, patients after following a KD have shown, in general, that they have achieved better glycemic control, a reduction in glycated hemoglobin and a reduction in all heart disease risk factors.

### Heart disease

As with type 2 diabetes, recommendations on nutrition are changing here also. The world of medicine can no longer ignore the mass of scientific evidence that shows that the ketogenic diet is capable of improving lipemia, normalizing glycemia and reducing levels of chronic inflammation, all factors linked to an increased risk of heart disease.

From the foregoing discussion, it can be seen that the ketogenic diet, which was once relegated to the status of mere expedient for rapid weight loss, is instead showing itself to be a valid therapeutic aid for many diseases. But the most evident problem with the KD protocol is the difficulty shown by patients in completely eliminating carbohydrates from their diet. Furthermore, the methods adopted up to now for starting the ketogenic diet have been either fasting or following a diet of fats and proteins only.

An aim of the present invention is to provide aglucidic and hyperlipidic food products with which to eliminate the use of carbohydrates (amides and simple sugars) and instead increase, sometimes exponentially, the use of fats in well-defined ratios, in order to prevent sugars from reaching the areas affected by the disease to be combated. All this, but without modifying the palate and habits of the person who has to follow a ketogenic dietary regime.

Therefore, another aim of the present invention is to provide products with the same appearance and the same organoleptic characteristics as traditional products, but with a negligible residue of carbohydrates, to which fats, often saturated fats, can be added in the necessary ratio in each instance.

According to the present invention, products like pasta, bread, derivatives of bread (croutons, crackers, pizzas, breadsticks etc.) and sweets (croissants, biscuits, cakes, chocolate etc.), are entirely similar, both to the eye and to the palate, to classic products made with flours of any type (from wheat flour to wholemeal flour), but in reality they are made by substituting such flours with mixtures which are made exclusively from plant proteins and plant fibers, with the addition of saturated and unsaturated fats in a composition made up indicatively of:
- Balanced plant proteins, from 10 to 40%;
- Soluble plant fibers, from 5 to 35%;
- Insoluble plant fibers, from 5 to 30%;
- Lipids, from 5 to 50%;
- Carbohydrates, from 0.5 to 10%.

Balanced plant proteins, which must not be confused with animal proteins, which contain the nucleic acids present in meat and also any medicines administered to the animal, are obtained exclusively from plants and are: gluten, lupin proteins, hazelnut proteins, soybean proteins, pea proteins, rice proteins, and oat proteins. These contain essential and non-essential amino acids in complete and balanced quantities so as to provide a complete amino acid package.

Soluble plant fibers and insoluble plant fibers are: wheat fiber, acacia fiber, guar fiber, bamboo fiber, maize fiber, chicory fiber, and erythritol. All these, although they are carbohydrates, are not converted to glucose. Furthermore, soluble fibers slow the absorption of sugars, while insoluble fibers slow intestinal transit times and, as a consequence, prolong the sensation of satiety.

The lipids used in the mixtures devised are: butter, cream, extra virgin olive oil, coconut oil, palm oil, and sunflower oil. The presence of the above mentioned lipids in large quantities in the aglucidic mixture is made possible by the fact that the residue of carbohydrates contained is so low as to permit coexistence with these lipids, and is also a result of the necessity to create, for some diseases, a ratio of from 1:2 to 1:5 or even higher (1 = carbohydrates and/or carbohydrates summed with proteins, 2 or 3 or 4 or 5 or more = fats in the same ratio).

The quantity of carbohydrates present in the aglucidic mixture refers exclusively to the residue of amides contained in the plant proteins and in the insoluble and soluble plant fibers existing on the market and present in the mixtures used.

The aglucidic mixtures described, which can be processed either with the same machines and with the same methods used to process wheat flour or with machines that have been modified, will obviously be added to all the water necessary for the dough, and will be completed by the addition of aromas and sweeteners which, obviously being free from simple sugars and amides, will serve in each instance to give the prepared products all the necessary characteristics to make them as similar as possible, in their appearance, consistency and flavor, to the original product to be imitated and substituted.

To this end also, the ingredients of an aglucidic-hyperlipidic mixture can undergo, within the ranges attributed individually thereto in the compositions indicatively shown above, percentage variations which are important for successful imitation but which have no effect on obtaining a ketogenic product for which that determined product is intended.

Hereinafter, in this regard and solely for the purposes of non-limiting example, are three examples (A-B-C) of aglucidic-hyperlipidic mixtures, where the percentages indicated refer to the initial dry weight of the components. (N.B. The sum of the percentages in the mixtures is not 100 because the water added for processing determines a % humidity in the finished products which, summed with these, results in 100).

| **AGLUICIDIC MIXTURE "A"** | |
|---|---|
| Balanced plant proteins | 11% |
| Soluble plant fibers | 15% |
| Insoluble plan fibers | 23% |
| Lipids | 50% |
| Carbohydrates | 0.53% |

| **AGLUICIDIC MIXTURE "B"** | |
|---|---|
| Balanced plant proteins | 12% |
| Soluble plant fibers | 18% |
| Insoluble plan fibers | 22% |
| Lipids | 18% |
| Carbohydrates | 1.8% |

| **AGLUICIDIC MIXTURE "C"** | |
|---|---|
| Balanced plant proteins | 22.9% |
| Soluble plant fibers | 16.8% |
| Insoluble plan fibers | 20% |
| Lipids | 23.3% |
| Carbohydrates | 1.34% |

For diseases, it is necessary to adhere to specific ratios according to the disease and, therefore, for the purposes of non-limiting example, below are two examples (D-E) of aglucidic-hyperlipidic mixtures, where the percentages given refer to the initial dry weight of the components. (N.B. The sum of the percentages in the mixtures is not 100 because the water added for processing determines a % humidity in the finished products which, summed with these, results in 100).

### AGLUCIDIC MIXTURE "D"

(GLUT1 - ratio 1:2, i.e. the ratio of lipids to the sum of proteins and carbohydrates is 2 to 1)

| | |
|---|---|
| Balanced plant proteins | 18% |
| Soluble plant fibers | 8% |
| Insoluble plan fibers | 12% |
| Lipids | 40% |
| Carbohydrates | 2% |

### AGLUCIDIC MIXTURE "E"

(tumors - ratio not lower than 1:5, i.e. the ratio of lipids to carbohydrates is 5 to 1)

| | |
|---|---|
| Balanced plant proteins | 15% |
| Soluble plant fibers | 15% |
| Insoluble plan fibers | 20% |
| Lipids | 30% |
| Carbohydrates | 5% |

In conclusion, it is clear that there is an advantage of a ketogenic diet which can be achieved by marketing the mixtures devised and the products obtained with them which are the subject matter of the present patent, and furthermore such a diet can be tailored to individuals on the basis of their different needs and is based on the substitution of the farinaceous products with perfectly similar products made with the above mentioned mixtures.

The ketogenic diet is necessary therefore:
- both in order to obtain weight loss, by eliminating carbohydrates and substituting farinaceous products with perfectly similar products made with the above mentioned aglucidic and hyperlipidic mixtures, but without having to limit the amounts and having the possibility, in a subsequent maintenance phase, of gradually reintegrating traditional farinaceous products, until a normal diet is restored;
- and for diseases that require the elimination of carbohydrates (amides and simple sugars), the ketogenic diet being usable as an adjuvant in many of these, allowing anyone to have the sensation of eating traditionally yet according to their single and individual needs while providing the body with the necessary nutrients for improving various psycho-physical conditions.

The disclosures in Italian Patent Application No. RA2014A000017 from which this application claims priority are incorporated herein by reference.

## Claims

1. Dietetic mixtures for human consumption in particular conditions in which the elimination of carbohydrates is necessary, which, intended to be used for weight loss in individuals and as an adjuvant in therapies for major diseases that require the elimination of carbohydrates, are **characterized in that** they comprise:
- Balanced plant proteins, from 10 to 40%;
- Soluble plant fibers, from 5 to 35%;
- Insoluble plant fibers, from 5 to 30%;
- Lipids, from 5 to 50%;
- Carbohydrates, from 0.5 to 10%,

2. The dietetic mixture according to claim 1, **characterized in that** it comprises not less than 0.5% carbohydrates and 50% lipids.

3. The dietetic mixture according to one or more of the preceding claims, **characterized in that** it comprises 12% balanced plant proteins.

4. The dietetic mixture according to one or more of the preceding claims, **characterized in that** it comprises 16.8% soluble plant fibers and 20% insoluble plant fibers.

5. The dietetic mixture according to one or more of the preceding claims, **characterized in that** it comprises 2% carbohydrates, 18% balanced plant proteins, and 40% lipids.

6. The dietetic mixture according to one or more of the preceding claims, **characterized in that** it comprises 5% carbohydrates, 15% balanced plant proteins, and 30% lipids.

7. Dietetic mixtures according to claim 1, wherein the plant proteins used are selected from among: gluten, lupin proteins, hazelnut proteins, soybean proteins, pea proteins, rice proteins, and oat proteins.

8. Dietetic mixtures according to claim 1, wherein the insoluble and soluble plant fibers are: wheat fiber, acacia fiber, guar fiber, bamboo fiber, maize fiber, chicory fiber, and erythritol.

9. Dietetic mixtures according to claim 1, wherein the lipids used are selected from among: butter, cream, extra virgin olive oil, coconut oil, palm oil, and sunflower oil.

10. Food products, obtained with aglucidic and hyperlipidic dietetic mixtures that are made exclusively from plant proteins and plant fibers, with the addition of saturated and unsaturated fats, according to one or more of claims 1 to 6.

11. A method of dieting in order to improve the appearance, diseases and psycho-physical conditions of persons who need a diet with no carbohydrates, according to one or more of claims 1 to 10.

12. The dieting method according to claim 11, wherein use of the ketogenic diet according to claim 5 is needed in order to improve the GLUT 1 disease.

13. The dieting method according to claim 11, wherein use of the ketogenic diet according to claim 6 is needed as an adjuvant in the treatment of tumors.

14. The dieting method according to one or more of claims 5, 11 and 12, in which it is necessary to modify the ratios of lipids to carbohydrates, or carbohydrates summed with proteins, by adding the necessary lipids in the ratios 1:2, 1:3, 1:4, 1:5, wherein the second number of the ratio is the lipids while the first number is the sum of proteins and carbohydrates, said ratios depending on the stage of the disease and to be maintained until the stabilization of the disease.

15. The dieting method according to one or more of claims 6, 11 and 13, comprising:
- An initial phase which is necessarily not lower than the ratio 1:5 (in which the second number of the ratio is the lipids and the first number is the carbohydrates);
- A subsequent phase, when the disease is improving, with a ratio not higher than 1:5.
